(19) Europäisches Patentamt
European Patent Office
Office européen des brevets

(11) Numéro de publication : **0 336 824 B1**

# (12) FASCICULE DE BREVET EUROPEEN

(45) Date de publication du fascicule du brevet : **24.06.92 Bulletin 92/26**

(51) Int. Cl.$^5$ : **C08F 36/18,** C08F 2/38

(21) Numéro de dépôt : **89400894.5**

(22) Date de dépôt : **31.03.89**

## (54) Procédé de fabrication de polychloroprène.

(30) Priorité : **08.04.88 FR 8804657**

(43) Date de publication de la demande : **11.10.89 Bulletin 89/41**

(45) Mention de la délivrance du brevet : **24.06.92 Bulletin 92/26**

(84) Etats contractants désignés : **AT BE CH DE ES FR GB GR IT LI LU NL SE**

(56) Documents cités :
**EP-A- 0 011 029**
**EP-A- 0 150 640**
**GB-A- 963 075**
**US-A- 3 507 825**

(73) Titulaire : **SOCIETE DISTUGIL**
**Les Miroirs - défense 3 18, avenue d'Alsace**
**F-92400 Courbevoie (FR)**

(72) Inventeur : **Sauterey, François**
**Rue de la Tour**
**Chant Village F-38560 Chant sur Drac (FR)**
Inventeur : **Branlard, Paul**
**27, rue Soeur Bouvier**
**F-69005 Lyon (FR)**
Inventeur : **Poullet, Paul**
**11 place Jean Moulin**
**F-38000 Grenoble (FR)**

(74) Mandataire : **Seugnet, Jean Louis et al**
**RHONE-POULENC CHIMIE Direction de la Propriété Industrielle 25, Quai Paul Doumer**
**F-92408 Courbevoie Cedex (FR)**

EP 0 336 824 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de fabrication de polychloroprène par polymérisation du chloroprène en présence d'agents modifiants, ainsi que les polychloroprènes obtenus et les mélanges de caoutchouc vulcanisables comprenant un polychloroprène sol préparé en présence des agents modifiants.

Il est connu d'effectuer la polymérisation du chloroprène en présence d'un agent de transfert de chaine (agent régulateur de poids moléculaire) tel qu'un mercaptan, ou un disulfure de xanthogène éventuellement associé à une faible quantité de soufre élémentaire. La polymérisation en présence d'un disulfure d'alkylxanthogène conduit à des polychloroprènes qui, par rapport aux polymères modifiés par les mercaptans, présentent des propriétés mécaniques, notamment résistance la traction, plus élevées, mais cependant un moins bon vieillissement. En outre, les polymères qui ont été modifiés par un disulfure de xanthogène présentent le problème d'une vulcanisation prématurée durant les étapes de transformation, telle que moulage des compositions le contenant, résultant en un grillage indésirable.

La présente invention a pour but de remédier à ces inconvénients.

Conformément à la présente invention, il a été trouvé que des polychloroprènes ayant une viscosité stable, une résistance au grillage améliorée et conduisant à des vulcanisats ayant d'excellentes propriétés mécaniques et dynamiques pouvaient être obtenus par polymérisation du monomère en émulsion aqueuse contenant deux agents de transfert convenablement choisis, mais pratiquement pas de soufre élémentaire.

Selon l'invention, le procédé de préparation du polychloroprène consiste à polymériser le chloroprène pouvant contenir jusqu'à 30 % en poids d'un autre monomère insaturé copolymérisable en émulsion aqueuse alcaline en présence d'un initiateur radicalaire et d'agents de transfert de chaines est caractérisé en ce que, comme agents de transfert, on utilise conjointement au moins un composé (1) choisi parmi les disulfures de xanthogène et au moins un composé (2) choisi parmi les polysulfures de bis(acylaminophényl).

Les disulfures de xanthogène sont des régulateurs de poids moléculaire bien connus correspondant à la formule générale (I)

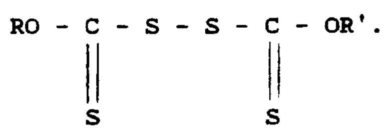

(I)

On donne la préférence aux composés dans lesquels R et R′ identiques ou différents sont des radicaux alkyle contenant de 1 à 8 atomes de carbone. Des exemples représentatifs sont le disulfure de diméthylxanthogène, le disulfure de diéthylxanthogène, le disulfure de di-isopropylxanthogène, le disulfure de di n-butylxanthogène, le disulfure de di-cyclohexylxanthogène.

Les polysulfures de bis(acylaminophényl) qui agissent comme co-agents de transfert au cours de la polymérisation ont la formule générale (II) :

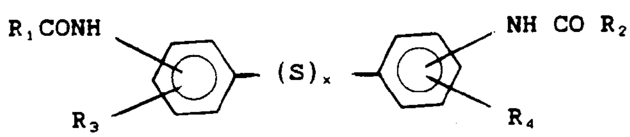

(II)

dans laquelle $R_1$ et $R_2$ identiques ou différents représentent un radical alkyl linéaire ou ramifié, aryle, arylalkyle, $R_3$ et $R_4$ identiques ou différents représentent H, $CH_3$, $C_2H_5$ et x est compris entre 2 et 4.

Les radicaux $R_1$ et $R_2$ peuvent être plus particulièrement des radicaux alkyle en $C_1$-$C_{12}$, des radicaux aryle ou arylalkyle en $C_6$-$C_{16}$ pouvant être substitués par un ou plusieurs radicaux alkyle ou alkyloxy en $C_1$-$C_4$, tels que les radicaux phényle, benzyl, benzhydryle, napthyl, phényl-éthyle, phényl-propyle, méthoxyphényle.

Parmi ces composés on donne la préférence aux disulfures de formule générale II dans lesquels $R_3$, $R_4$ sont H et $R_1$, $R_2$ désignent un radical phényle (disulfures de benzanilide) et plus particulièrement au disulfure de bis(2-benzamido phényl) qui est un produit disponible commercialement.

La polymérisation est effectuée au moyen des techniques courantes de polymérisation en émulsion aqueuse alcaline en présence d'un agent de transfert de chaines.

Le chloroprène peut être polymérisé seul ou être remplacé, jusqu'à 30%, par un autre monomère copolymérisable avec le chloroprène possédant au moins une double liaison éthylénique.

Parmi les monomères copolymérisables avec le chloroprène, on peut citer les composés vinylaromatiques

comme le styrène, les vinyltoluènes et vinylnaphtalènes, les acides acryliques méthacryliques ainsi que leurs dérivés esters et nitriles comme l'acrylate d'éthyle, le méthacrylate de méthyle et l'acrylonitrile, les dioléfines conjuguées aliphatiques comme le 1.3-butadiène, l'isoprène, le 1-chlorobutadiène, le 2.3-dichlorobutadiène et le 2.3 diméthylbutadiène, les éthers et cétones vinyliques comme l'éther méthylvinylique, l'acétate de vinyle et la méthylvinylcétone.

La concentration en monomères présents dans l'émulsion aqueuse n'est pas critique : elle est comprise généralement entre 30 et 60 % du poids total de l'émulsion.

Tous les agents émulsionnants et colloïdes protecteurs conventionnels peuvent être utilisés pour préparer l'émulsion du chloroprène. Parmi ces agents, on peut citer les sels solubles dans l'eau, particulièrement les sels de sodium, potassium ou ammonium des composés suivants : acides gras à longue chaine, colophane ou dérivés de la colophane de gemme, de bois, de tall-oil, la colophane partiellement polymérisée, isomérisée ou dismutée ; les sulfates d'alcools gras, les alkyl sulfates et alkyl sulfonates ; les sels alcalins des acides alkyl aryl sulfoniques ainsi que des produits de condensation du formol avec les acides aryl sulfoniques comme l'acide naphtalène sulfonique, et des condensats d'oxyde d'éthylène et de phénols.

Le pH de l'émulsion est de préférence compris entre 11 et 13 environ.

Comme initiateurs de radicaux libres, on peut mentionner notamment les composés peroxydes comme les persulfates de métaux alcalins ou d ammonium, l'eau oxygénée, les peroxydes organiques comme le peroxyde de cumène, le peroxyde de benzoyle ainsi que les ferricyanures de métaux alcalins et d'ammonium.

La polymérisation est effectuée en atmosphère inerte en l'absence d'oxygène, la température pouvant être comprise dans l'intervalle de 0 à 80°C et de préférence de 10 à 50°C.

Les agents de transfert de chaine utilisés selon l'invention dont normalement introduits en totalité dans la phase organique avant initiation de la polymérisation. Alternativement, il est possible de les additionner en partie simultanément ou successivement au cours de la polymérisation, de préférence avant un taux de conversion du monomère de environ 50 %.

La quantité totale des agents de transfert varie avec le poids moléculaire des composés choisis et avec leur efficacité de modification. Pour cette raison, on peut définir la proportion du composé (1) comme la quantité efficace exprimée en disulfure du diisopropylxanthogène qui est de l'ordre de 0,01 à 0,8 parties et de préférence comprise entre 0,07 et 0,50 parties pour 100 parties de monomère(s). De la même manière, on définit la proportion du composé (2) comme la quantité efficace exprimée en disulfure de benzanilide, cette quantité étant de l'ordre de 0,01 à 1,3 parties, de préférence comprise entre 0,20 et 0,75 parties pour 100 parties de monomère(s).

La quantité totale préférée de disulfure de diisopropylxanthogène et de disulfure de benzanilide est comprise entre 0,2 et 1 parties pour 100 parties de monomères. Les proportions équivalentes des autres agents de transfert peuvent être déterminées par l'homme de métier à l'aide de quelques essais préliminaires et en fonction des viscosités Mooney désirables qui se situent généralement entre environ 20 et 150.

La polymérisation est intérrompue lorsque le taux de conversion des monomères est de préférence au moins égal à 60 % par addition d'inhibiteurs de polymérisation conventionnels. Après élimination du monomère résiduel, et addition éventuelle de composés anti-oxygènes, le polychloroprène peut être utilisé directement au stade latex ou être isolé d'une façon connue quelconque par exemple par précipitation avec un électrolyte ou par coagulation sur tambour froid ou sur tambour chauffé à la vapeur, lavage et séchage.

Les polymères de chloroprène obtenus se caractérisent par le fait qu'ils sont constitués d'enchaînements d'unités monomères terminés par un groupe ~ S - alkylxanthogène et d'enchaînements d'unités monomères terminés par un groupe S - acylaminophényl, les radicaux alkylxanthogène et acylaminophényl, lesdits groupes étant tels que définis dans les formules (I) et (II) provenant respectivement de la coupure des ponts soufre des composés (1) et (2) définis ci-dessus. De manière préférentielle, le radical alkylxanthogène est isopropylxanthogène et le radical acylaminophényl est 2-benzamidophényl.

Ces polychloroprènes ont une viscosité Mooney particulièrement stable au stockage. Ils peuvent être vulcanisés dans les systèmes de vulcanisation conventionnels. Les compositions vulcanisables sont aisément travaillables avec une plus grande sécurité de mise en oeuvre que les polychloroprènes modifiés au disulfure de xanthogène en présence ou non de soufre antérieurement connus, les produits vulcanisés obtenus ayant d'excellentes caractéristiques mécaniques et dynamiques.

Dans les compositions vulcanisables, les polymères de chloroprène du type sol (solubles dans le benzène) sont utilisés avantageusement en mélange avec des polymères de chloroprène de type gel (insolubles dans le benzène) pour leur bonne aptitude à la transformation, par exemple par extrusion sous pression à travers un orifice ayant la forme désirée. De tels mélanges sol-gel ont été décrits notamment dans les brevets US-A-3147318, US-A-3655827, GB-A-118690.

La présente invention est également relative à des mélanges de polychloroprènes comprenant un polymère de chloroprène sol et un polymère de chloroprène gel dans le rapport en poids 95/5 à 25/75 qui sont

caractérisés en ce que le polymère sol est constitué d'unités monomères terminés par un groupe ~ S - alkylxanthogène et d'unités monomères terminés par un groupe ~ S - acylaminophényl lesdits groupes provenant respectivement de la coupure des ponts soufre des composés (1) et (2) définis ci-dessus.

Le polymère sol est préparé avantageusement selon le procédé de l'invention dans lequel on a employé un disulfure de bisalkylxanthogène comme composé (1) et un disulfure de bis(acylaminophényl) comme composé (2). Pour la préparation du polymère gel, la polymérisation du chloroprène peut être effectuée en émulsion aqueuse de manière usuelle. On peut par exemple polymériser le chloroprène en absence ou en présence d'agents de transfert, en utilisant les mêmes techniques générales que pour la production d'un polychloroprène sol, mais en poursuivant la polymérisation jusqu'à un taux de conversion élevé, de 90-100 %. Un autre procédé connu et préféré consiste à copolymériser le chloroprène avec un monomère renfermant au moins deux doubles liaisons polymérisables. De tels monomères appropriés comprennent notamment le divinylbenzène et les esters d'acide méthacrylique avec des composés polyhydroxylés tels que les alkylèneglycols, le triméthylolpropane, le dihydroxybenzène. Quel que soit le mode de préparation, on peut bien entendu remplacer une partie du chloroprène, jusqu'à environ 30 %, par un autre monomère insaturé conventionnel.

Le mélange du polymère de chloroprène sol et du polymère de chloroprène gel est de préférence réalisé par mélange des latex puis isolation par des procédés courants tels que la coagulation par congélation. Il est cependant possible de mélanger les polymères isolés individuellement par des moyens mécaniques tels que broyage ou malaxage.

Le mélange de polymères sol-gel est utilisé dans des compositions vulcanisables qui, par rapport aux mélanges dans lesquels le polymère sol a été modifié par un disulfure d'alkylxanthogène seul, présentent une tendance réduite au grillage et au gonflement lors de l'extrusion.

La présente invention est illustrée par les exemples suivants, dans lesquels toutes les parties et pourcentages sont donnés en poids, sauf indication contraire.

EXEMPLE 1

On charge dans un récipient de polymérisation

| | Parties en poids |
|---|---|
| Chloroprène ........................ | 100 |
| Disulfure de diisopropylxanthogène ..... | 0,20 |
| Disulfure de benzanilide (PEPTON 22).... | 0,50 |
| Eau ................................ | 110 |
| Colophane dismutée (RESINE 731D[R] Société HERCULES ) .......... | 3 |
| Hydroxyde de sodium .................. | 0,60 |
| Sel de sodium du produit de condensation formaldéhyde - acide naphtalène sulfonique (DAXAD 15[R] de la Société GRACE ) ................. | 0,50 |

On procède à la polymérisation à 40°C sous atmosphère d'azote à un pH de 12,5 en règlant un débit convenable d'initiateur constitué d'une solution aqueuse à 2,5 % de persulfate de sodium et 2 % de dithionite de sodium.

La polymérisation est arrêtée à un taux de conversion de 67 % par addition d'une émulsion de chloroprène contenant 0,01 partie de t.butylcatechol et 0,003 parties de phénothiazine.

On élimine ensuite le monomère résiduel par entrainement à la vapeur puis on isole le polychloroprène par coagulation du latex amené à pH 6,5 sur un tambour refroidi à - 20°C. Le film obtenu est lavé puis séché.

Le polymère obtenu a une viscosité Mooney (ML 1 + 4 à 100°C) initiale de 53.

La variation de la viscosité Mooney (ML1+4 à 100°C) du caoutchouc stocké en étuve à 70°C est la suivante :

ML 1+4 - 100 °C après 24 heures + 1

48 heures + 1
72 heures + 2

EXEMPLE 2 (Exemple comparatif)

On charge dans un récipient de polymérisation

| | Parties en poids |
|---|---|
| Chloroprene ........................ | 100 |
| n.dodécylmercaptan .................. | 0,23 |
| Eau .................................. | 90 |
| Colophane dismutée (Résine 731D[F] Société HERCULES)............ | 3 |
| Hydroxyde de sodium .................. | 0,60 |
| Sel de sodium du produit de condensation formaldehyde-acide naphtalene sulfonique (DAXAD 15[F] Société GRACE ........................ | 0,50 |

On procède à la polymérisation à 40°C sous atmosphère d'azote à un pH de 12,5 en réglant un débit convenable d'initiateur constitue d'une solution aqueuse à 0,5 % de persulfate de sodium et 5 % de dithionite de sodium.

La polymérisation est arrêtée à un taux de conversion de 67 % par addition d'une émulsion de chloroprène contenant 0,01 partie de butylcatechol et 0,003 parties de phénothiazine.

On élimine ensuite le monomère résiduel par entrainement à la vapeur puis on isole le polychloroprène par coagulation du latex amené à pH 6,5 sur un tambour refroidi à - 20°C. Le film obtenu est lavé et séché.

Le polymère obtenu a une viscosité Mooney (ML 1 + 4 à 100°C) de 46.

EXEMPLE 3 (Exemple comparatif)

On charge dans un récipient de polymérisation

| | Parties en poids |
|---|---|
| Chloroprène ........................ | 100 |
| Disulfure de diisopropylxanthogène.... | 0,67 |
| Eau ................................ | 110 |
| Colophane dismutée (Résine 731 D[R] Société HERCULES)............... | 3 |
| Hydroxyde de sodium .................. | 0,60 |
| Sel de sodium du produit de condensation formaldéhyde - acide naphtalène sulfonique DAXAD 15[F], société GRACE).......... | 0,50 |

On procède à la polymérisation à 40°C sous atmosphère d'azote a un pH de 12, 5 en règlant un débit convenable d' initiateur constitué d'une solution aqueuse à 2,5 % de persulfate de sodium et 2 % de dithionite de sodium.

La polymérisation est arrêtée à un taux de conversion de 67 % par addition d'une émulsion de chloroprène contenant 0,01 partie de t.butylcatechol et 0,003 parties de phénothiazine.

On élimine ensuite le monomère résiduel par entrainement à la vapeur puis on isole le polychloroprène par coagulation du latex amené à pH 6,5 sur un tambour refroidi à - 20°C. Le film obtenu est lavé puis séché.

Le polymère obtenu a une viscosité Mooney (ML 1 + 4 à 100°C) de 46.

EXEMPLES 4 à 9

On prépare des polychloroprènes dans les conditions décrites à l'exemple 1 en utilisant le même système en émulsion et en faisant varier le taux des agents de transfert selon les indications suivantes.

| Exemples | disulfure de diisopropylxanthogène | disulfure de benzanilide |
|---|---|---|
| 4 | 0,40 | 0,30 |
| 5 | 0,035 | 0,70 |
| 6 | 0,08 | 0,22 |
| 7 | 0,22 | 0,22 |
| 8 | 0,48 | 0,22 |
| 9 | 0,15 | 0,40 |

L'évolution de la viscosité Mooney du caoutchouc obtenu et stocké à 70°C en étuve est la suivante :

Tableau 1

| VISCOSITE MOONEY ML 1+4 à 100°C | INITIALE | A 70°C après | | |
|---|---|---|---|---|
| | | 24 h | 48 h | 72 h |
| Ex. 4 | 54 | 55 | 55 | 56 |
| Ex. 5 | 51 | 52 | 53 | 53 |
| Ex. 6 | 141 | 141 | 142 | 145 |
| Ex. 7 | 107 | 107 | 107 | 109 |
| Ex. 8 | 37 | 37 | 37 | 36 |
| Ex. 9 | 67 | 67 | 67 | 67 |

Les polychloroprènes préparés selon les exemples 1 à 5 sont évalués au regard de leur mise en oeuvre et de leurs propriétés mécaniques et dynamiques.

Dégradabilité à la mise en oeuvre

On mesure la différence de consistance Mooney Δ ML 1+4 du polymère avant et après malaxage dans les conditions suivantes :

Essai A :

Le polymère est, dans un premier temps, malaxé sur cylindres ouverts, selon la norme ISO 1796.

Dans un deuxième temps, le caoutchouc malaxé est introduit dans une chambre BRABENDER à 40°C (vitesse de rotation des pales : 80 t/mn).

Après 10 minutes de malaxage, la mesure de consistance Mooney (ML 1+4 à 100°C) est effectuée selon la norme ISO 289.

Essai B :

On renouvelle l'essai A en incorporant après 30 secondes de malaxage au Brabender 1 partie de diorthotolylguanidine pour 100 parties de polymère.

Les résultats figurent dans le tableau 2.

TABLEAU 2

| EX. | ML 1+4 100°C initiale | △ ML 1+4 - 100°C après 10 min de malaxage ESSAI A | ESSAI B |
|---|---|---|---|
| 1 | 53 | - 20 | - 12 |
| 2 | 46 | - 6 | - 7 |
| 3 | 46 | - 13 | + 33 |
| 4 | 54 | - 20 | - 7 |
| 5 | 51 | - 18 | - 14 |

Les polymères des exemples 1, 4 et 5 selon l'invention se dégradent davantage. Leur mise en oeuvre est donc améliorée par rapport aux polymères de l'art antérieur. La sécurité de mise en oeuvre est particulièrement marquée lorsqu'on utilise des ingrédients de formulation tels que les dérivés de guanidine qui sont connus comme grillants.

Propriétés mécaniques et dynamiques des vulcanisats

Les polymères des exemples 1 à 5 sont mélangés selon les formulations suivantes :

| Formulation A | Parties en poids |
|---|---|
| Polychloroprène ...................... | 100 |
| Oxyde de magnésium .................. | 4 |
| Oxyde de zinc ....................... | 5 |
| Acide stéarique ..................... | 0,5 |
| Phényl β naphtylamine ............... | 2 |
| Noir de carbone N 660 ............... | 30 |
| Ethylène thiourée (MIXLAND 75 R) ................. | 0,67 |
| (Société française MLPC) | |

| Formulation B | Parties en poids |
|---|---|
| Polychloroprène ...................... | 100 |
| Oxyde de magnésium .................. | 4 |
| Oxyde de zinc ....................... | 5 |
| Acide stéarique ..................... | 0,5 |
| P.phénylène diamine substituée ....... (Wingstay 100R - GOODYEAR ) | 1 |

| | |
|---|---|
| Noir de carbone N 660 ............... | 30 |
| Monosulfure de tétraméthyltiurame .... | 1 |
| Diorthotolylguanidine ............... | 1 |
| Soufre ............................. | 1 |

Chaque formulation est vulcanisée à 153°C pendant 40 minutes. Les propriétés des vulcanisats sont testées selon les normes suivantes :

| | |
|---|---|
| Grillage - 120°C | Norme ISO 667 |
| MAXI MONSANTO à 153°C | Norme ISO 3417 |
| Résistance à la rupture | Norme ISO 37 |
| Module 300 % | Norme ISO 37 |
| Allongement à la rupture | Norme ISO 37 |
| Déformation remanente à la compression (compression set) après 96 h à 100°C | Norme ISO 815 |

Propriétés dynamiques = les essais sont effectués sur des éprouvettes réalisées selon la norme ISO 133.

Les résultats sont exprimés en nombre de Kilocycles pour atteindre 50 et 100 % de propagation d'une entaille de longueur initiale de 2 mm par rapport à la largeur totale de l'éprouvette.

Les résultats figurent dans les tableaux 3 et 4.

**TABLEAU 3**

**Propriétés des vulcanisats**

**Formulation A**

| EXEMPLES | 1 | 2 | 3 | 4 | 5 |
|---|---|---|---|---|---|
| Mooney ML 1+4 100°C du mélange | 82 | 74 | 78 | 83 | 81 |
| Grillage 120°C min./ Δ 10 points | 13,5 | 10 | 10 | 13,5 | 14 |
| Propriétés mécaniques | | | | | |
| Maxi MONSANTO | 89 | 86 | 114 | 110 | 79 |
| Résistance rupture MPa | 22,7 | 19,7 | 21,1 | 21,8 | 22,6 |
| Module 300 % MPa | 14 | 12,9 | 16,2 | 16,5 | 12 |
| Compression set % | 33 | 30 | 29 | 29. | 35 |
| Résistance déchirement k N/m | | | | | |
| entaille 2 mm | 23 | 24 | 21 | 24 | 26 |
| entaille 0,5 mm | 56 | 57 | 50 | 56 | 57 |
| Propriétés dynamique Nbre de kilocycles | | | | | |
| propagation 50 % | 10000 | 6000 | 2000 | 2000 | 300000 |
| - 100 % | 300000 | 80000 | 9000 | 10000 | › $10^6$ |

TABLEAU 4

Propriétés des vulcanisats

Formulation B

| EXEMPLES | 1 | 2 | 3 | 4 | 5 |
|---|---|---|---|---|---|
| Mooney ML 1+4 100°C du mélange | 65 | 61 | 68 | 73 | 65 |
| Grillage 120°C min/ ≥ 10 points | 26,2 | 33,5 | 28,5 | 24,7 | 28,5 |
| Propriétés mécaniques | | | | | |
| Maxi MONSANTO | 95,5 | 94 | 106 | 103 | 90 |
| Résistance rupture MPa | 24 | 22,4 | 22,8 | 23,8 | 23,2 |
| Module 300 % MPa | 12,1 | 12,4 | 13,4 | 13,1 | 11,8 |
| Compression set % | 59 | 61 | 62 | 63 | 57 |
| Résistance déchirement kN/m | | | | | |
| entaille 2 mm | 54 | 48 | 44 | 48 | 56 |
| entaille 0,5 mm | 24 | 23 | 21 | 21 | 25 |
| Propriétés dynamiques | | | | | |
| Nbre de kilocycles | | | | | |
| propagation 50 % | 8000 | 3500 | 2000 | 3000 | 10000 |
| - 100 % | 100000 | 20000 | 8000 | 10000 | 200000 |

EXEMPLE 10 - Mélange de polymère sol et de polymère gel

Production du polymère sol

Polymère 10A - On prépare un latex de polychloroprène selon l'invention de la manière indiquée dans l'exemple 1.

La viscosité MOONEY (ML 1+4 - 100°C) initiale d'un échantillon qui a été isolé du latex par coagulation et séché est de 51.

Polymère 10B - Comparativement, on prépare un latex de polychloroprène modifié au xanthogène de la manière indiquée à l'exemple 3, mais en utilisant 0,50 parties de disulfure de diisopropylxanthogène pour 100 parties de chloroprène. La viscosité MOONEY initiale d'un échantillon isolé du latex et séché est de 54.

Production du polymère gel (polymère 10C)

On charge dans un récipient de polymérisation.

| | Parties en poids |
|---|---|
| Chloroprène ........................ | 100 |
| Dimethacrylate de diéthylène glycol ............... | 2 |
| Eau ................................ | 100 |
| Colophane dismutée (Résine 731D®) .... | 3,5 |
| Hydroxyde de sodium ................ | 0,60 |
| Sel de sodium du produit de condensation formaldéhyde-naphtalène sulfonique (Daxad 15®) .......... | 0,50 |

La polymérisation est réalisée à 45°C sous atmosphère d'azote à un pH de 12,5 en règlant un débit convenable d'initiateur constitué d'une solution aqueuse à 2,5 % de persulfate de sodium et 2 % de dithionite de sodium.

Lorsque 98 % du monomère a été converti en polymère, on arrête la polymérisation par addition d'une émulsion de chloroprène contenant 0,01 partie de t. butylcatéchol et 0,003 parties de phénothiazine.

Préparation du mélange sol/gel

On mélange au stade latex 80 parties du polymère soluble dans le benzène avec 20 parties du polymère insoluble dans le benzène et on isole ensuite le mélange polymère du latex.

Les polymères sol/gel obtenus sont ensuite mélangés conformément à la formulation A décrite précédemment, puis vulcanisés à 153°C pendant 40 minutes.

Les propriétés des vulcanisats sont testées selon les normes précédemment décrites. Les résultats figurent dans le Tableau 5.

EXEMPLE 11

On charge dans un récipient de polymérisation

| | Parties en poids |
|---|---|
| Chloroprène ........................ | 100 |
| Disulfure de diisopropylxanthogène ... | 0,20 |
| Disulfure de benzanilide (PEPTON 22).. | 0,30 |
| Eau ................................ | 110 |
| Colophane dismutée (RESINE 731D® Société HERCULES ) ....... | 3 |
| Hydroxyde de sodium ................ | 0,60 |
| Sel de sodium du produit de condensation formaldéhyde - acide naphtalène sulfonique (DAXAD 15® de la Société GRACE ) .................. | 0,50 |

On procède à la polymérisation à 45°C sous atmosphère d'azote à un pH de 12,5 en règlant un débit convenable d'initiateur constitué d'une solution aqueuse à 2,5 de persulfate de sodium et 2 % de dithionite de sodium.

La polymérisation est arrêtée à un taux de conversion de 64 % par addition d'une émulsion de chloroprène contenant 0,01 partie de t.butylcatechol et 0,003 parties de phénothiazine, puis le monomère résiduel est éliminé par entrainement à la vapeur.

La viscosité Mooney (ML 1+4 - 100°C) initiale du polymère isolé par coagulation est de 90.

EXEMPLE 12 (Exemple comparatif)

On charge dans un récipient de polymérisation

| | Parties en poids |
|---|---|
| Chloroprène ...................... | 100 |
| Disulfure de diisopropylxanthogène.. | 0,28 |
| Eau .............................. | 90 |
| Colophane dismutée (Résine 731 D[R] Société HERCULES)................ | 3 |
| Hydroxyde de sodium ............... | 0,50 |
| Sel de sodium du produit de condensation formaldéhyde - acide naphtalène sulfonique (DAXAD 15[R], société GRACE)........ | 0,50 |

On procède à la polymérisation à 45°C sous atmosphère d'azote à un pH de 12,5 en règlant un débit convenable d'initiateur constitué d'une solution aqueuse à 2,5 % de persulfate de sodium et 2 % de dithionite de sodium.

La polymérisation est arrêtée à un taux de conversion de 70 % par addition d'une émulsion de chloroprène contenant 0,01 partie de butylcatechol et 0, 003 parties de phénothiazine.

La viscosité Mooney (ML 1+4 - 100°C) initiale du polymère isolé par coagulation est de 84.

EXEMPLE 13 - Mélange sol/gel

On mélange au stade latex 90 parties du polymère soluble dans le benzène obtenu selon les exemples 11 et 12 avec 10 parties du polymère insoluble dans le benzène obtenu selon l'exemple 10C. On isole ensuite le mélange de polymères du latex.

Les polymères sont alors mélangés avec les composants suivants de la manière usuelle :

| | Parties en poids |
|---|---|
| Polychloroprène ................ | 100 |
| Oxyde de magnésium ............. | 4 |
| Oxyde de zinc ................. | 5 |
| Acide stéarique ................ | 0,5 |
| Phényl β naphtylamine .......... | 2 |
| Noir de carbone N 660 .......... | 75 |
| Huile aromatique 729FC (SHELL) .. | 30 |
| Ethylène thiourée .............. | 0,67 |

Cette formulation est vulcanisée à 153°C pendant 40 minutes. Les propriétés des vulcanisats sont indiquées dans le Tableau 5.

TABLEAU 5

| sol/gel | Formulation A Mélange 80/20 | | Formulation B Mélange 90/10 | |
|---|---|---|---|---|
| | 10A/10C | 10B/10C | 11/10C | 12/10C |
| MOONEY mélange | 93 | 99 | 75 | 78 |
| Grillage 153°C | | | | |
| min △ 10 pts | 8,75 | 6,75 | 11 | 9 |
| △ 35 pts | 12,5 | 9,75 | 16 | 11,25 |
| MONSANTO | | | | |
| maxi | 93 | 118 | 97 | 108 |
| min. + 10 | 3,5 | 3 | 5 | 3 |
| min. + 30 | 6,25 | 4,5 | 9 | 5,5 |
| min. optimum | 16 | 23,5 | 25 | 23 |
| Résistance rupture MPa | 22,3 | 20,6 | 17 | 20 |
| Allongement rupture % | 395 | 375 | 250 | 260 |
| Module MPa | | | | |
| 200 % | 7,8 | 9,9 | 12 | 14,8 |
| 300 % | 14,8 | 18,3 | 14,1 | 18,8 |
| Extrusion | | | | |
| débit ml/min. | 15,1 | 14,5 | 18 | 17,3 |
| gonflement filière % | 76 | 91 | 31 | 52,2 |
| aspect | lisse | lisse | lisse | lisse |

## Revendications

1. Procédé de polymérisation du chloroprène ou d'un mélange de chloroprène et de jusqu'à 30 % en poids d'un monomère copolymérisable, en émulsion aqueuse alcaline en présence d'un iniateur radicalaire et d'agents de transfert de chaines caractérisé en ce que, comme agents de transfert, on utilise conjoitement au moins un composé (1) choisi parmi les disulfures de xanthogène et au moins un composé (2) choisi parmi les polysulfures de bis(acylaminophényl).

2. Procédé selon la revendication 1 caractérisé en ce que le composé (2) est choisi parmi les sulfures de benzanilide.

3. Procédé selon la revendication 2 caractérisé en ce que le composé (2) est le disulfure de bis(2-benzamidophényl).

4. Procédé selon l'une des revendications 1 à 3 caractérisé en ce que la quantité du composé (1) est comprise entre 0,01 et 0,8 de préférence entre 0,07 et 0,50 parties exprimée en disulfure de diisopropylxanthogène pour 100 parties de monomère(s).

5. Procédé selon l'une des revendications 1 à 4 caractérisé en ce que la quantité du composé (2) est comprise entre 0,01 et 1,3 de préférence entre 0,20 et 0,75 parties, exprimée en disulfure de benzanilide, pour 100 parties de monomère(s).

6. Procédé selon l'une des revendications 1 à 5 caractérisé en ce que la quantité totale des composés (1) et (2) est comprise entre 0,2 et 1 partie pour 100 parties de monomère(s), exprimée pour le composé (1) en disulfure de diisopropylxanthogène et, pour le composé (2), en disulfure de benzanilide.

7. Procédé selon l'une quelconque des revendications 1 à 6 caractérisé en ce qu'il est mis en oeuvre sans pratiquement de soufre élémentaire.

8. Polychloroprènes caractérisés en ce qu'ils sont constitués d'enchaînements d'unités monomères terminés par un groupe ~ S-alkyle xanthogène et d'enchaînements d'unités monomères terminés par un groupe ~ S-phénylaminoacyl, lesdits groupes provenant respectivement de la coupure des ponts de soufre des composés (1) et (2).

9. Polychloroprènes selon la revendication 8 caractérisé en ce que le radical alkylxanthogène est isopropylxanthogène et le radical phénylaminoacyl est 2-benzamidophényl.

10. Mélanges de polychloroprènes comprenant un polymère de chloroprène sol et un polymère de chloroprène gel dans le rapport en poids 95/5 à 25/75 caractérisé en ce que le polymère sol est constitué d'enchaînements d'unités monomères terminés par un groupe ~ S-alkylxanthogène et d'enchaînements d'unités monomères terminés par un groupe ~ S-acylaminophényl, lesdits groupes provenant respectivement de la coupure des ponts soufre des composés (1) et (2).

11. Mélanges de polymères selon la revendication 10 caractérisés en ce que le polymère sol est obtenu selon le procédé des revendications 1 à 7, dans lequel on a employé un disulfure de bisalkylxanthogène comme composé (1) et un disulfure de bis(acylaminophényl) comme composé (2).

## Patentansprüche

1. Verfahren zur Polymerisation von Chloropren oder eines Gemischs von Chloropren und bis zu 30 Gewichtsprozent eines copolymerisierbaren Monomeren, in einer wäßrigen, alkalischen Emulsion in Gegenwart eines radikalbildenden Initiators und von Kettenübertragungsmitteln, dadurch gekennzeichnet, daß man als Übertragungsmittel gemeinsam wenigstens eine Verbindung (1), ausgewählt aus Xanthogendisulfiden, und wenigstens eine Verbindung (2), ausgewählt aus Bis(acylaminophenyl)polysulfiden, verwendet.

2. Verfahren nach Anspruch 1, dadurch gekennzeichnet, daß die Verbindung (2) aus Benzaniliddisulfiden ausgewählt ist.

3. Verfahren nach Anspruch 2, dadurch gekennzeichnet, daß die Verbindung (2) Bis(2-benzamidophenyl)disulfid ist.

4. Verfahren nach einem der Ansprüche 1 bis 3, dadurch gekennzeichnet, daß die Menge der Verbindung (1) zwischen 0,01 und 0,8 und vorzugsweise zwischen 0,07 und 0,5 'Teilen, ausgedrückt als Diisopropylxanthogendisulfid, pro 100 Teilen des oder der Monomeren, liegt.

5. Verfahren nach einem der Ansprüche 1 bis 4, dadurch gekennzeichnet, daß die Menge der Verbindung (2) zwischen 0,01 und 1,3 und vorzugsweise zwischen 0,2 und 0,75 Teilen, ausgedrückt als Benzaniliddisulfid, pro 100 Teilen des oder der Monomeren, liegt.

6. Verfahren nach einem der Ansprüche 1 bis 5, dadurch gekennzeichnet, daß die Gesamtmenge der Verbindungen (1) und (2) zwischen 0,2 und 1 Teil pro 100 Teilen des oder der Monomeren liegt, ausgedrückt für die Verbindung (1) als Diisopropylxanthogendisulfid und für die Verbindung (2) als Benzaniliddisulfid.

7. Verfahren nach einem der Ansprüche 1 bis 6, dadurch gekennzeichnet, daß es praktisch ohne elementaren Schwefel durchgeführt wird.

8. Polychloroprene, dadurch gekennzeichnet, daß sie aus Verknüpfungen von Monomereinheiten, die mit einer ~S-Alkylxanthogengruppe abschließen, und Verknüpfungen von Monomereinheiten, die mit einer ~S-Phenylaminoacylgruppe abschließen, bestehen, wobei diese Gruppen jeweils von der Trennung der Schwefelbrücken der Verbindungen (1) und (2) herrühren.

9. Polychloroprene nach Anspruch 8, dadurch gekennzeichnet, daß der Alkylxanthogenrest ein Isopropylxanthogen ist und der Phenylaminoacylrest ein 2-Benzamidophenyl ist.

10. Polychloroprengemische, die ein Sol eines Chloroprenpolymeren und ein Gel eines Chloroprenpolymeren im Gewichtsverhältnis 95/5 bis 25/75 enthalten, dadurch gekennzeichnet, daß das Polymersol aus Verknüpfungen von Monomereinheiten, die mit einer ~S-Alkylxanthogengruppe enden, und Verknüpfungen, die mit einer ~S-Alkylaminophenylgruppe enden, besteht, wobei die Gruppen jeweils aus der Trennung der Schwefelbrücken der Verbindungen (1) und (2) stammen.

11. Polymergemische nach Anspruch 10, dadurch gekennzeichnet, daß das Polymersol nach dem Verfahren der Ansprüche 1 bis 7 erhalten wird, in dem man ein Bisalkylxanthogendisulfid als Verbindung (1) und ein Bis(acylaminophenyl)disulfid als Verbindung (2) verwendet hat.

## Claims

1. Process for the polymerisation of chloroprene or of a mixture of chloroprene and up to 30% by weight of a copolymerisable monomer, in alkaline aqueous emulsion in the presence of a radical initiator and chain transfer agents, characterised in that the chain transfer agents used are, conjointly, at least one compound (1) chosen from xanthogen disulphides and at least one compound (2) chosen from bis(acylaminophenyl) polysulphides.

2. Process according to Claim 1, characterised in that the compound (2) is chosen from benzanilide disulphides.

3. Process according to Claim 2, characterised in that the compound (2) is bis(2-benzamidophenyl) disulphide.

4. Process according to one of Claims 1 to 3, characterised in that the amount of compound (1) is between 0.01 and 0.8 and preferably between 0.07 and 0.50 parts, expressed as diisopropylxanthogen disulphide per 100 parts of monomer(s).

5. Process according to one of Claims 1 to 4, characterised in that the amount of compound (2) is between 0.01 and 1.3 and preferably between 0.20 and 0.75 parts, expressed as benzanilide disulphide, per 100 parts of monomer(s).

6. Process according to one of Claims 1 to 5, characterised in that the total amount of compounds (1) and (2) is between 0.2 and 1 part per 100 parts of monomer(s), expressed as diisopropylxanthogen disulphide in the case of the compound (1) and as benzanilide disulphide in the case of the compound (2).

7. Process according to any one of Claims 1 to 6, characterised in that it is carried out virtually without elemental sulphur.

8. Polychloroprenes, characterised in that they consist of chains of monomer units terminated by an ~ S-alkylxanthogen group and chains of monomer units terminated by an ~ S-phenylaminoacyl group, the said groups originating, respectively, from the scission of the sulphur bridges of the compounds (1) and (2).

9. Polychloroprenes according to Claim 8, characterised in that the alkylxanthogen radical is isopropylxanthogen and the phenylaminoacyl radical is 2-benzamidophenyl.

10. Mixtures of polychloroprenes comprising a sol chloroprene polymer and a gel chloroprene polymer in the weight ratio of 95/5 to 25/75, characterised in that the sol polymer consists of chains of monomer units terminated by an ~ S-alkylxanthogen group and chains of monomer units terminated by an ~ S-acylaminophenyl group, the said groups originating respectively from the scission of the sulphur bridges of the compounds (1) and (2).

11. Mixtures of polymers according to Claim 10, characterised in that the sol polymer is obtained according to the process of Claims 1 to 7, in which a bisalkylxanthogen disulphide has been employed as compound (1) and a bis(acylaminophenyl) disulphide has been employed as compound (2).